**Europäisches Patentamt**

**European Patent Office**

**Office européen des brevets**

(11) Numéro de publication: **0 191 668**

**B1**

(12) **FASCICULE DE BREVET EUROPEEN**

(45) Date de publication du fascicule du brevet: **14.03.90**

(51) Int. Cl.⁵: **H 01 G 4/30**

(21) Numéro de dépôt: **86400075.7**

(22) Date de dépôt: **15.01.86**

(54) **Condensateur céramique multicouche haute fréquence de forte capacité.**

(30) Priorité: **17.01.85 FR 8500643**
**03.12.85 FR 8517859**

(43) Date de publication de la demande:
**20.08.86 Bulletin 86/34**

(45) Mention de la délivrance du brevet:
**14.03.90 Bulletin 90/11**

(84) Etats contractants désignés:
**AT BE CH DE GB IT LI LU NL SE**

(56) Documents cités:
**DE-A-2 909 531**
**GB-A- 712 650**
**US-A-4 430 690**

(73) Titulaire: **EUROFARAD-EFD**
**93 rue Oberkampf**
**F-75540 Paris Cédex11 (FR)**

(72) Inventeur: **Dubuisson, Jacques**
**22, avenue Emile Zola**
**F-75015 Paris (FR)**
Inventeur: **Le Gal, Pascal**
**4, rue de Paris**
**F-77450 Magny-Le-Hongre (FR)**
Inventeur: **Lavillé, Henri**
**19, rue Jeanne d'Arc**
**F-77400 Lagny-sur-Marne (FR)**

(74) Mandataire: **Schrimpf, Robert et al**
**Cabinet Regimbeau 26, Avenue Kléber**
**F-75116 Paris (FR)**

Courier Press, Leamington Spa, England.

# EP 0 191 668 B1

**Description**

La présente invention concerne un condensateur à diélectrique céramique multicouche.

De façon classique, un tel condensateur est constitué d'un empilement de feuilles de céramique portant des motifs conducteurs formant armatures élémentaires séparées par une couche isolante formant diélectrique, ces motifs étant alternés d'une couche à la suivante de manière à former deux séries d'armatures reliées chacune par au moins une émergence du motif à une liaison conductrice commune respective.

Un tel condensateur trouve notamment son utilisation comme capacité de filtrage dans les alimentations à découpage. On sait que ce type d'alimentation permet un rendement et une miniaturisation d'autant plus élevés que leur fréquence de travail est élevée. La limitation intervient notamment du fait que les condensateurs de filtrage utilisés voient leurs performances se réduire au fur et à mesure que la fréquence de travail augmente.

En effet, le condensateur monté dans le circuit d'alimentation se comporte à la manière d'une ligne de transmission, du fait des paramètres résistifs et inductifs qui viennent s'ajouter à la simple valeur de capacité. De la sorte, le composant présente une fréquence de résonance propre, et son efficacité comme condensateur de filtrage diminue au fur et à mesure que la fréquence de travail s'élève et se rapproche de cette fréquence de résonance.

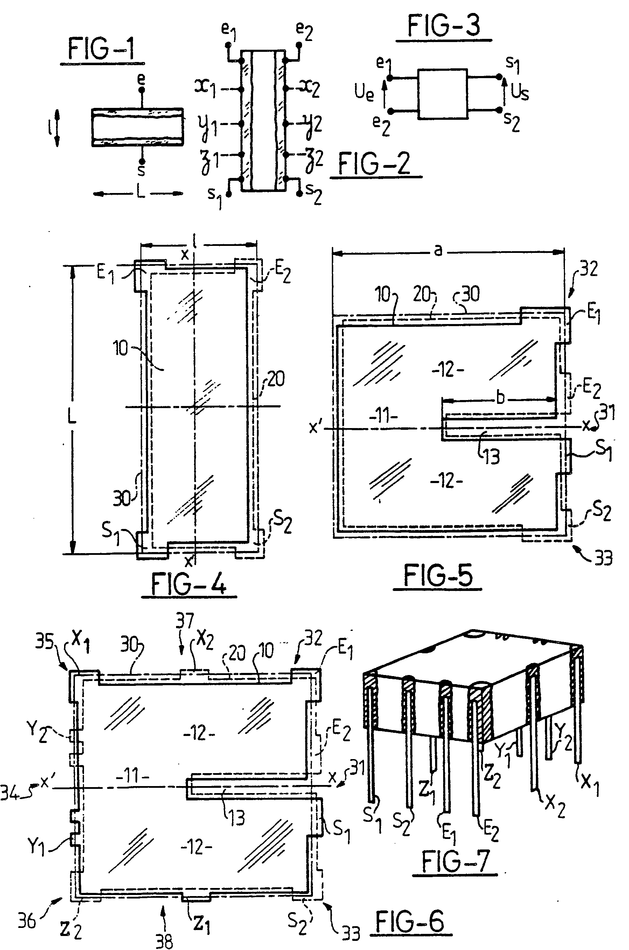

Pour améliorer les performances en H.F., il a été proposé d'utiliser des condensateurs de forme rectangulaire, les métallisations étant réalisées sur les deux côtés allongés du composant. Un tel condensateur, illustré par exemple figure 1, a une dimension $l$ inférieure à $L$, c'est-à-dire qu'il a une forme générale courte et large, à la différence des condensateurs classiques, qui sont de forme générale carrée ou rectangulaire mais longue et étroite (c'est-à-dire que les métallisations sont alors réalisées sur les petits côtés du rectangle).

Sur la figure 1, un tel composant connu a été représenté utilisé sous forme de dipôle, avec une entrée $e$ et une sortie $s$; sur la figure 2 on a représenté une autre implantation, où le même composant est monté en quadripôle, avec ses entrées $e_1$, $e_2$ et ses sorties $s_1$, $s_2$. Le schéma équivalent est celui d'un quadripôle (figure 3), dont la fonction de transfert peut être décrite sous forme matricielle.

Le fait que les métallisations de chaque armature court-circuitent ensemble l'entrée et la sortie ($e_1$ avec $s_1$; $e_2$ avec $s_2$) limite néanmoins l'efficacité d'ensemble du composant; les fréquences de résonance sont ainsi généralement de l'ordre de quelques centaines de kHz.

Par ailleurs, pour limiter les déphasages, on a proposé d'alimenter en plusieurs points chacune des séries d'électrodes d'un tel composant, en prévoyant des connexions supplémentaires $x_1$, $y_1$, $z_1$ et $x_2$, $y_2$, $z_2$ illustrées en pointillé sur la figure 2. L'alimentation en plusieurs points d'une même électrode permet de réduire les déphasages qui apparaissent en haute fréquence entre l'entrée et la sortie.

Le document GB—A—712 650 décrit un condensateur dont la structure est analogue à celle définie par le préambule de la revendication 1. Mais ces condensateurs, dans lesquels les motifs conducteurs ont une forme générale allongée et présentent chacun au moins deux émergences reliées à des liaisons conductrices distinctes et situées aux extrémités d'un même côté allongé du composant, les liaisons conductrices correspondantes constituant alors respectivement l'une des entrées et l'une des sorties du quadripôle, ne permettent pas d'obtenir des performances très élevées, du point de vue de la fréquence de résonance, les valeurs limites de fonctionnement étant de l'ordre du MHz pour des capacités de quelques μF.

Selon l'invention, le motif de forme générale allongée est replié en forme de U, les deux émergences d'extrémité d'un même motif se trouvant alors à la partie distale de chacune des branches du U.

Le motif conducteur est par exemple de forme sensiblement carrée, avec une encoche radiale définissant le U. On obtient ainsi un composant de forme carrée usuelle, mais doté de performances très supérieures, comme on le montrera par la suite.

De préférence, on prévoit en outre que, sur un même motif, l'une des émergences d'extrémité est située au voisinage du coin du composant, tandis que l'autre émergence d'extrémité est située au voisinage du centre du côté correspondant du composant.

En variante ou en complément, outre les émergences d'extrémité, il est prévu sur chaque motif au moins une émergence supplémentaire sur la partie centrale du U, les liaisons conductrices correspondantes étant alors situées sur un même côté du composant, correspondant à la partie centrale du U. Cette émergence supplémentaire est de préférence placée en vis-à-vis d'une émergence d'extrémité du même motif.

Il peut être prévu pour chaque motif une pluralité d'émergences en nombre $n$ supérieur à 2, ces $n$ émergences étant régulièrement réparties d'un même côté allongé du composant, et constituant l'une des deux séries de $n$ pôles d'un multipôle. On réduit ainsi la résistance série du composant grâce à la multiplication des prises et au chemin plus court entre les "entrées" et les "sorties" du condensateur; en outre, les électrodes sont alimentées en réduisant au minimum le déphasage propre ajouté par le composant.

En variante ou en complément, outre les émergences d'extrémité, il peut être prévu sur chaque motif au moins une émergence supplémentaire à la partie proximale de l'une des branches du U avec alternance de branche d'une feuille à la suivante, les liaisons conductrices correspondantes étant alors situées aux

2

coins respectifs du composant.

En variante ou en complément, outre les émergences d'extrémité, il peut être prévu sur chaque motif au moins une émergence supplémentaire au centre de l'une des branches du U avec alternance de branche d'une feuille à la suivante, les liaisons conductrices correspondantes étant alors situées sensiblement au milieu des côtés respectifs du composant.

Ainsi, la multiplication du nombre d'émergences pour chacune des deux séries d'électrodes permet d'alimenter ces dernières en plusieurs points, et cette alimentation répartie permet de réduire la résistance série équivalente et l'inductance série équivalente du composant et d'amener à un minimum le déphasage propre ajouté par le composant (en effet, en haute fréquence, ce dernier ne se comporte plus comme un simple circuit RLC série, mais comme une ligne de transmission dont la fonction de transfert ne peut être décrite que sous forme matricielle).

Cependant, cette structure multipolaire intrinsèque au composant, si elle procure des avantages du point de vue électrique, conduit néanmoins à une difficulté supplémentaire de mise en oeuvre technologique au moment du montage du composant, dans la mesure où celui-ci ne nécessite plus deux ou quatre connexions, mais un nombre beaucoup plus élevé (par exemple dix).

De plus, outre la nécessité de réaliser un grand nombre de points de connexion (fils rapportés ou soudage direct sur un substrat), il faut prévoir sur le substrat un dessin de circuit relativement complexe pour relier deux à deux les émergences correspondant à chacune des deux séries d'électrodes, pour que le composant fonctionne comme un simple dipôle ou un simple quadripôle.

Selon un second aspect de la présente invention, il est apporté une solution à cette difficulté, en proposant un système de prise de connexion pour regrouper de façon simple le grand nombre d'émergences du composant en seulement deux ou quatre bornes.

A cet effet, les émergences de chaque pluralité d'émergences sont réunies entre elles par un élément métallique commun de prise de connexion et de distribution de courant entre les émergences, cet élément métallique comportant une âme centrale et une pluralité de branches radiales, l'âme centrale reposant sur l'une des faces supérieure et inférieure, respectivement, du bloc céramique, et les branches radiales étant repliées de manière à venir en contact avec les émergences respectives auxquelles elles sont soudées, l'une des branches au moins étant en outre repliée de manière à s'étendre au-delà de l'une des faces du bloc céramique, pour former pôle de connexion commun à la pluralité d'émergences respective.

De la sorte, ce système de prise de connexion permettra:

une technologie simplifiée pour l'utilisateur, qui n'aura qu'à considérer un composant quadripolaire ou dipolaire, sans qu'il soit nécessaire de prévoir des dessins de circuits complexes pour relier deux à deux chacune des émergences;

une excellente répartition de courant vers chaque série d'émergences (on a vu plus haut l'importance de cet aspect pour réduire au minimum le déphasage propre ajouté par le composant);

un effet de drain thermique, toutes les émergences étant réunies à l'âme centrale de l'élément métallique, dont la surface peut être importante, puisqu'elle est disposée sur l'une des faces supérieure ou inférieure du composant, face sur laquelle ne se trouve aucune émergence. Ce dernier aspect revêt une importance particulière lorsque le composant est utilisé pour des alimentations de puissance à découpage, où les courants sont importants et où les pertes réactives vont croissant avec la fréquence.

De préférence, deux branches sont repliées de manière à s'étendre au-delà de l'une des faces du bloc céramique, pour former l'une des deux séries de deux pôles d'un quadripôle.

Comme on le verra dans la description détaillée, dans tous les modes de réalisation un détrompage est obtenu sans aucune opération supplémentaire, pour distinguer les entrées des sorties du quadripôle.

Très avantageusement, les deux éléments métalliques correspondant à chaque pluralité d'émergences sont réalisés par pliage et troncature des branches d'une pièce plane identique pour l'un et l'autre éléments. Ceci permet d'utiliser un élément unique pour réaliser indistinctement l'un ou l'autre des éléments de prise de connexion.

En outre, dans une réalisation avantageuse, ce même élément métallique qui permet de réaliser l'une ou l'autre des prises de connexion peut être plié de deux manières différentes, selon que l'on souhaite que la face au-delà de laquelle s'étendent les branches formant pôle de connexion soit la face inférieure du bloc céramique (c'est-à-dire que ce dernier sera monté à plat) ou l'une des faces latérales de celui-ci (qui sera donc monté debout).

D'autres caractéristiques et avantages de l'invention, considérée dans ses différents aspects, apparaîtront à la lecture de la description détaillée ci-dessous, faite en référence aux dessins annexés sur lesquels:

les figures 1 à 3 précitées montrent des configurations de la technique antérieure,

la figure 4 montre un dessin d'électrode,

la figure 5 montre le dessin d'électrode pour un mode de réalisation de l'invention, cette électrode étant repliée en forme de U,

la figure 6 montre un perfectionnement de la figure 5, pour une variante multipolaire,

la figure 7 est une vue perspective du composant pourvu de fils de connexion indépendants,

la figure 8 est une vue en plan de l'élément métallique permettant la prise de connexion, avant pliage de ses branches,

la figure 9 est une vue éclatée du bloc céramique et des deux éléments métalliques de connexion après pliage des branches,

la figure 10 est une vue homologue de la figure 9, après mis en place des éléments métalliques sur le composant,

les figures 11 et 12 sont des vues, respectivement en élévation et de dessous, du composant final obtenu, après enrobage,

la figure 13 est un schéma du montage du composant en quadripôle,

la figure 14 est un schéma de montage du composant en dipôle,

les figures 15 à 18 sont homologues des figures 9 à 12, pour un composant monté debout sur le substrat, et non plus à plat,

les figures 19 et 20 sont homologues des figures 8 et 10, pour un type particulier de composant de forme allongée dont les émergences sont réparties en alignement sur deux faces latérales.

Les figures 5 à 6 illustrent la structure interne du pavé capacitif céramique, qui est l'élément essentiel de l'invention.

Ces figures montrent le dessin de l'électrode (métallisation superficielle d'une couche de céramique) avant empilement des couches élémentaires et avant découpe du composant individuel. La référence 10 désigne le motif d'une couche donnée et la référence 20, celui d'une couche adjacente, supérieure ou inférieure. Le motif 20 est généralement identique au motif 10, à une symétrie d'axe x'x près. La référence 30 désigne le contour du composant finalement obtenu; de manière classique, il est prévu sur le motif des parties débordantes qui émergeront du composant pour permettre de relier ensemble toutes les émergences correspondantes des électrodes de l'empilement par une métallisation commune formée sur la tranche du composant.

Dans le dispositif de la figure 4, on a prévu des motifs de forme rectangulaire allongée (rapport $L/l$ supérieur à 1, le composant étant d'autant plus performant que ce rapport est élevé). Deux émergences $E_1$ et $S_1$ sont prévues aux deux extrémités d'un même côté allongé du composant; pour l'électrode adjacente 20, on aura deux émergences $E_2$ et $S_2$ à chaque extrémité du côté allongé opposé. Cette structure permet d'éviter, comme c'était le cas dans la technique antérieure, de court-circuiter ensemble l'entrée $E_1$ et la sortie $S_1$ (et de même l'entrée $E_2$ et la sortie $S_2$).

Dans le mode de réalisation de la figure 5, le motif est sensiblement carré et comporte une encoche 13 définissant un U comportant une partie centrale 11 et deux branches 12. Le comportement d'ensemble de ce composant est comparable à celui du composant de la figure 4, l'électrode rectangulaire étant repliée pour améliorer la compacité d'ensemble (de préférence, la longueur $b$ de la fente 13 est environ la moitié de celle du côté $a$ du motif). Les points de connexion $E_1$, $E_2$, $S_1$ et $S_2$ sont ainsi ramenés du même côté 31 du composant. L'émergence $E_1$ peut par exemple être formée à un coin 32, comme l'émergence $S_2$ au coin opposé 33. Les émergences $E_2$ et $S_1$ se retrouvent alors à la partie centrale du côté 31. Cette disposition a l'avantage de permettre une totale symétrie entre l'entrée et la sortie, le composant pouvant alors être monté de manière indifférente.

Sur la figure 6, il a été prévu des points de connexion supplémentaires pour alimenter l'électrode en plusieurs endroits: pour le motif 10, on peut ainsi par exemple prévoir une émergence $X_1$ au coin 35 du composant, une émergence $Y_1$ au milieu de la partie centrale 11 du U, et une émergence $Z_1$ au milieu de la branche 12 du U. De la même façon, on prévoit pour l'électrode adjacente 20 des émergences $X_2$, $Y_2$ et $Z_2$ symétriques des émergences $Z_1$, $Y_1$ et $X_1$ par rapport à l'axe x'x (axe de l'encoche 13).

L'une des séries d'émergences, par exemple $Y_1$, $Y_2$, peut éventuellement recevoir un dessin particulier, comme représenté figure 6, pour servir de détrompeur et distinguer le côté 34 du côté 31 du composant. Sans cette précaution, l'aspect extérieur des côtés 31 et 34 serait en effet identique, dans le cas où les émergences $Y_1$ et $Y_2$ se trouvent en vis-à-vis des émergences $S_1$ et $E_2$, respectivement, ce qui constitue un cas de figure préféré. Il n'est par contre pas nécessaire de prévoir un détrompage pour différencier les côtés 37 et 38 qui sont fonctionnellement identiques du fait de la symétrie des motifs 10 et 20 par rapport à l'axe x'x.

Le tableau I ci-dessous illustre les performances améliorées d'un composant quadripolaire selon l'invention (conforme au dessin de la figure 5) par rapport à un condensateur classique monté de la même façon en quadripôle (configuration de la figure 2) et de dimensions identiques: c'est-à-dire que dans l'un et l'autre cas, il s'agit d'un condensateur de forme approximativement carrée (16 mm × 15 mm) formé d'une centaine de couches de céramique type II (au titanate de baryum) d'épaisseur de diélectrique 30 μm assurant une tenue en tension de 63 V. Les métallisations extérieures sont réalisées de manière classique avec une encre à base d'argent, de palladium ou d'un alliage argent/palladium.

EP 0 191 668 B1

## TABLEAU I

|  | Performances vues de l'entrée du quadripôle | | Performances vues de la sortie du quadripôle | |
|---|---|---|---|---|
|  | condensateur classique | condensateur de l'invention | condensateur classique | condensateur de l'invention |
| Capacité nominale | 16 µF | 13 µF | 16 µF | 13 µF |
| Résistance série équivalente | 21 mΩ | 27 mΩ | 3 mΩ | 1 mΩ |
| Inductance série équivalente | 13 nH | 0,7 nH | 0,8 nH | 0,3 nH |
| Fréquence de résonance | 350 kHz | 3 MHz | 1,5 MHz | 4,5 MHz |

En ce qui concerne le mode d'utilisation du composant, le pavé de céramique peut tout d'abord être utilisé tel quel par report sur un substrat et prise de connexion par soudage direct; il peut également être pourvu de connexions rapportées, comme représenté par exemple figure 7. L'ensemble est alors enrobé, de sorte que seuls émergent les fils de connexion; enfin, il peut être prévu un système de prise de connexion reliant ensemble les émergences homologues à une borne commune.

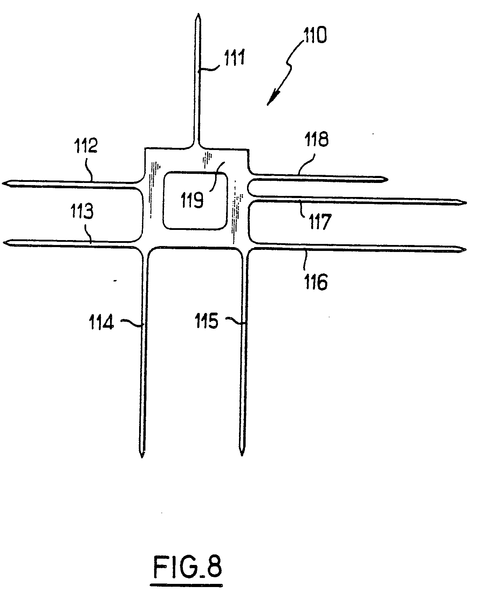

Un autre aspect de l'invention, illustré en référence aux figures 8 à 20, concerne précisément un tel système de prise de connexion et de répartition de courant spécialement conçu pour le composant décrit plus haut en référence aux figures 4 à 6.

Sur la figure 8, on a représenté une vue en plan de l'élément métallique destiné à assurer la prise de connexion et la répartition de courant. Cet élément 110 comporte une pluralité de branches radiales 111 à 118 dont la disposition est fonction de la répartition des émergences métalliques du composant; les différentes branches 111 à 118 s'étendent à partir d'une âme centrale 119 carrée, de côté légèrement inférieur à celui des faces supérieure ou inférieure du composant.

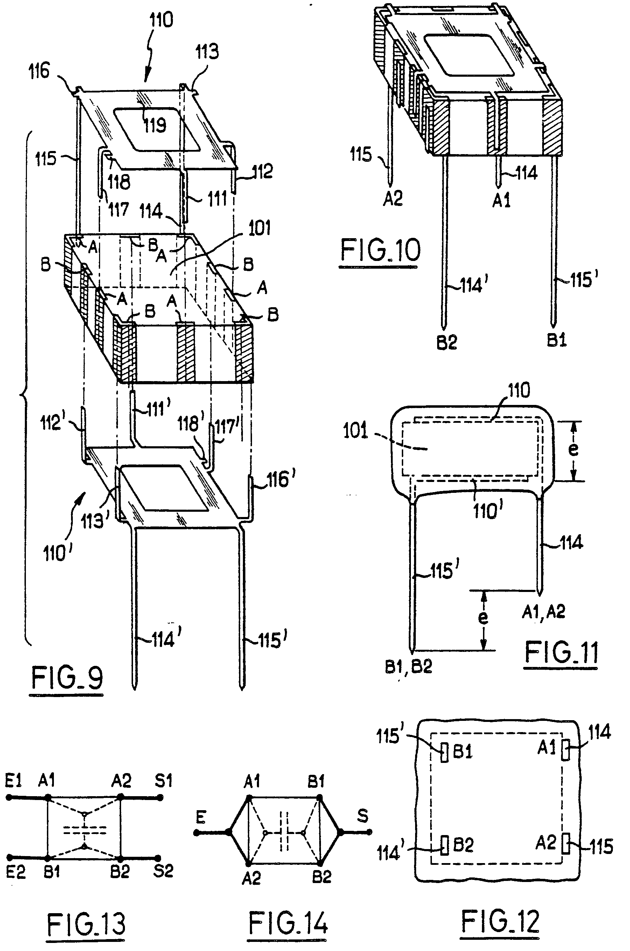

Dans le cas particulier de la figure 8, cet élément 110 est destiné à un condensateur 101 (figure 9) sous forme de pavé céramique carré comportant dix émergences A, B, à savoir quatre émergences sur deux côtés opposés, et une émergence au milieu de chacun des deux autres côtés; la constitution interne du composant est conforme à la figure 6, c'est-à-dire que les émergences sont alternées (pour une émergence donnée reliée à une série d'électrodes du condensateur, les deux émergences adjacentes seront reliées à l'autre série d'électrodes).

Le matériau de cet élément 110 peut être par exemple un bronze au béryllium étamé, qui possède une excellente conductivité électrique et thermique, procure une bonne soudabilité, tout en permettant un façonnage aisé par des moyens conventionnels.

Cet élément peut être réalisé soit par gravure chimique (pour des petites séries), soit par estampage; le façonnage est ensuite réalisé de façon tout à fait classique par pliage des branches et découpe de celles-ci à la longueur appropriée. Pour faciliter ces opérations, il est possible de prévoir un trou carré central dans l'âme 119, qui permet un centrage parfait de la pièce pendant les différentes opérations.

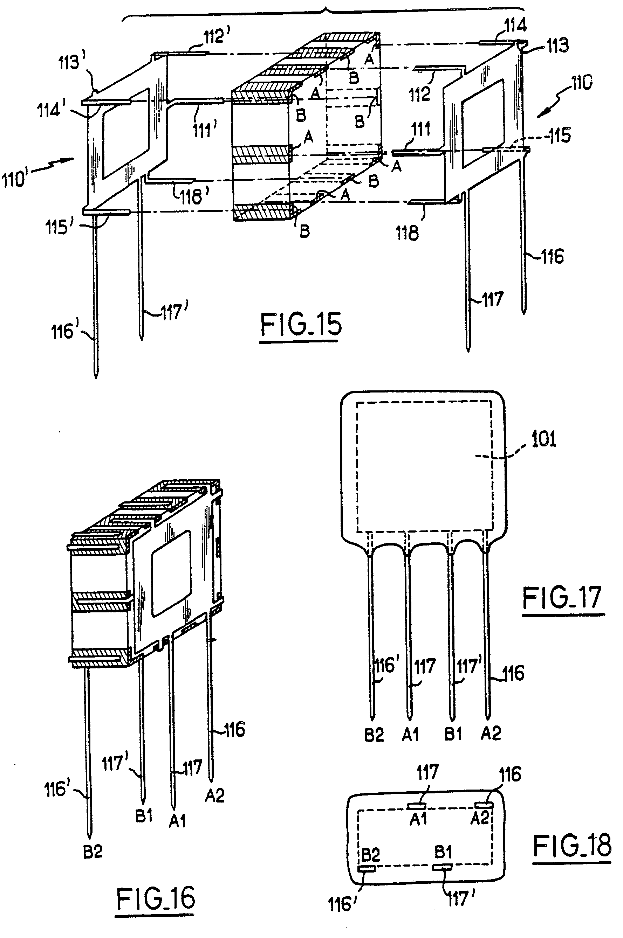

On remarquera que l'élément illustré comporte huit branches pour seulement cinq métallisations à relier entre elles (métallisations référencées A ou B sur la figure 9): en effet, selon les cas, toutes les branches ne sont pas utilisées. Le nombre plus élevé permet de disposer d'un élément unique pour réaliser (avec un pliage différent) l'une et l'autre des séries de connexion, avec possibilité de montage du composant aussi bien à plat (figures 9 à 12) que debout (figures 15 à 18), seuls le pliage des branches et la longueur de la découpe étant modifiés.

Dans certains cas (branches 114 et 115, figure 9), une même branche sera à la fois soudée à une métallisation et prolongée pour former fil de connexion: on constate ainsi que, sur l'élément référencé 110 figure 9, trois des branches (113, 116 et 118) ont été coupées car superflues. Dans d'autres cas, des branches distinctes seront utilisées pour la liaison à la métallisation et comme fils de connexion (branches 113', 114' et 116', 115' figure 9), de sorte que, dans le cas de l'élément 110' de la figure 9, une seule branche (la branche 118') a été coupée.

On notera également sur la figure 8 que la longueur de toutes les branches n'est pas la même.

En effet, selon les configurations, les branches 114, 115, 116 et 117 pourront être prolongées pour former le fil de connexion; il est donc nécessaire de les prévoir plus longues. Par contre, les branches 111, 112, 113 et 118 seront, quelle que soit la configuration, toujours soudées à des émergences et jamais prolongées; on peut donc leur donner une longueur plus faible, inférieure ou égale à l'épaisseur du composant (ou les tronquer ultérieurement à cette valeur).

Les figures 9 et 10 montrent plus précisément la manière dont les éléments métalliques sont façonnés pour assurer les différentes prises de connexion aux dix émergences du composant, dont la distribution de courant sera assurée à partir de seulement quatre fils de connexion (branches 114, 115, 114' et 115').

Une fois les deux éléments mis en place, les différentes branches en contact avec les métallisations sont soudées à celles-ci, et l'ensemble est par exemple enrobé dans une résine isolante, pour donner un composant dont l'aspect final est celui illustré figures 11 et 12.

On notera que ce composant a un aspect (quadripôle) et un brochage tout à fait identique à celui d'un composant standard équivalent, évitant ainsi pour l'utilisateur toute difficulté supplémentaire de câblage.

Bien qu'il soit possible de présenter le composant sous la forme d'un dipôle (en ne conservant que l'une des deux connexions A1 ou A2, et B1 ou B2, chacune étant reliée respectivement aux émergences A et B du pavé céramique 101), on préfère une structure quadripolaire, qui permet d'améliorer les performances d'ensemble du composant.

La figure 13 illustre le montage en quadripôle; on notera que le composant est symétrique (les performances sont les mêmes si l'on permute les bornes d'entrée A1, B1 avec les bornes de sortie A2, B2) et non polarisé (les entrées E1 et E2 peuvent être permutées, de même que les sorties S1 et S2).

Il est cependant nécessaire de prévoir un détrompage, pour que l'utilisateur ne confonde pas les paires (A1A2, B1B2) et (A1B1, A2B2), respectivement, car le composant est carré et une rotation d'un quart de tour correspond à un brochage différent (dans le cas de la figure 13, il y aurait ainsi court-circuit des deux entrées et des deux sorties). Ce détrompage est en fait obtenu sans aucune opération supplémentaire par le fait que les branches 114, 115 (reliées aux métallisations A) vont se trouver plus courtes que les branches 114′, 115′ (reliées aux métallisations B), la différence étant égale à l'épaisseur *e* du composant (cf. figure 11).

La figure 14 montre une variante du schéma de montage, dans lequel le composant est monté en dipôle, et non plus en quadripôle; comme on peut le constater, de par sa structure propre, le composant se prête indifféremment à un montage en quadripôle ou en dipôle, selon l'utilisation désirée.

Enfin, on notera que, au lieu d'enrober le composant avec des fils de connexion émergents, on peut aussi l'utiliser pour un report direct sur un substrat, en s'arrêtant au stade de la figure 10 et en coupant les branches 114, 115, 114′, 115′ après pliage à quelques millimètres du coude de pliage. Ceci permettra un montage par report direct d'un composant quadripolaire, beaucoup plus aisé à réaliser que celui d'un composant à dix pôles comme c'est le cas du pavé céramique 101 illustré figure 9, dont le report direct sur un substrat exigerait un dessin de connexions particulièrement complexe.

Les figures 15 à 18 montrent une variante dans laquelle, tout en utilisant le même élément métallique (celui illustré figure 8) que précédemment, le composant est monté debout et non plus à plat: les branches formant fils de connexion sont dans ce cas les branches 116, 117 et 116′, 117′ qui sont laissées intactes.

On remarquera que dans ce cas particulier, les éléments 110 et 110′ sont pliés de façon absolument identique, et qu'il n'est pas nécessaire de prévoir un détrompage par des longueurs différentes de branches (sur la figure 16 ou 18, on constate que le composant ne se présente pas identiquement à lui-même après une rotation d'un quart de tour; en outre les paires (A1, A2) et (B1, B2) sont électriquement équivalentes).

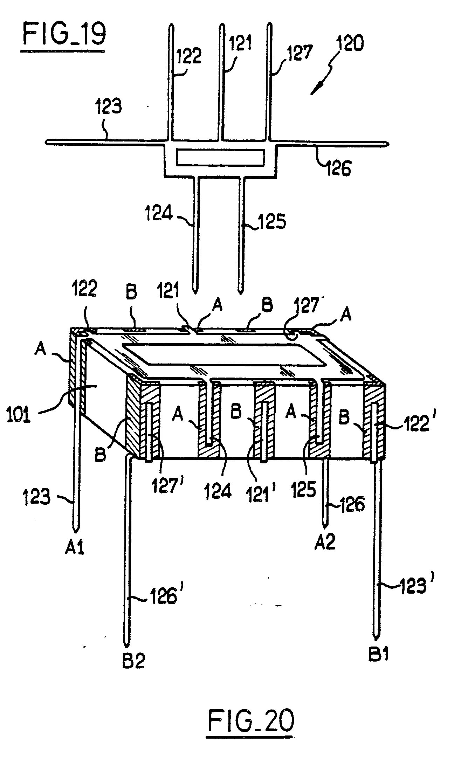

Les figures 19 et 20 se réfèrent enfin à une variante, dans laquelle le bloc céramique 101 présente ses métallisations sur seulement deux faces latérales (et non plus quatre, comme précédemment) ces faces latérales correspondant généralement aux côtés allongés d'un composant rectangulaire (et non plus carré).

L'élément métallique 120 aura alors l'aspect indiqué figure 19, les différentes branches 121 à 127 étant repliées comme illustré figure 20.

Là encore, il ne sera pas nécessaire de prévoir un détrompage, en raison de la forme rectangulaire du composant.

## Revendications

1. Un condensateur à diélectrique céramique multicouche, du type formé d'un empilement de feuilles de céramique portant des motifs conducteurs (10; 20) formant armatures élémentaires séparées par une couche isolante formant diélectrique, ces motifs étant alternés d'une couche à la suivante de manière à former deux séries d'armatures reliées chacune par au moins une émergence du motif à une liaison conductrice commune respective, les motifs conducteurs des armatures ayant une forme générale allongée et présentant chacun au moins deux émergences $(E_1, S_1; E_2, S_2)$, reliées à des liaisons conductrices distinctes et situées aux extrémités d'un même côté allongé (L) du composant, les liaisons conductrices correspondantes constituant alors respectivement l'une des entrées $(E_1; E_2)$ et l'une des sorties $(S_1; S_2)$, d'un quadripôle, caractérisé en ce que le motif de forme générale allongée est replié en forme de U, les deux émergences d'extrémité $(E_1, S_1; E_2, S_2)$ d'un même motif se trouvant alors à la partie distale de chacune des branches (12) du U.

2. Un condensateur selon la revendication 1, dans lequel il est prévu pour chaque motif une pluralité d'émergences en nombre *n* supérieur à 2, ces *n* émergences étant régulièrement réparties d'un même côté allongé du composant, et constituant l'une des deux séries de *n* pôles d'un multipôle.

3. Un condensateur selon la revendication 1, dans lequel, sur un même motif, l'une $(E_1; S_2)$ des émergences d'extrémité est située au voisinage du coin (32; 33) du composant, tandis que l'autre $(S_1; E_2)$ émergence d'extrémité est située au voisinage du centre du côté correspondant (31) du composant.

4. Un condensateur selon la revendication 1, dans lequel, outre les émergences d'extrémité, il est prévu sur chaque motif au moins une émergence supplémentaire $(Y_1; Y_2)$ sur la partie centrale (11) du U, les liaisons conductrices correspondantes étant alors situées sur un même côté (34) du composant, correspondant à la partie centrale du U.

5. Un condensateur selon la revendication 4, dans lequel ladite émergence supplémentaire $(Y_1; Y_2)$ est placée en vis-à-vis d'une émergence d'extrémité $(S_1; E_2)$ du même motif.

6. Un condensateur selon la revendication 1, dans lequel, outre les émergences d'extrémité, il est prévu sur chaque motif au moins une émergence supplémentaire $(X_1; Z_2)$ à la partie proximale de l'une des branches du U avec alternance de branche d'une feuille à la suivante, les liaisons conductrices correspondantes étant alors situées aux coins respectifs (35, 36) du composant.

7. Un condensateur selon la revendication 1, dans lequel, outre les émergences d'extrémité, il est prévu sur chaque motif au moins une émergence supplémentaire $(Z_1; X_2)$ au centre de l'une des branches du U avec alternance de branche d'une feuille à la suivante, les liaisons conductrices correspondantes étant alors situées sensiblement au milieu des côtés respectifs (38, 37) du composant.

8. Un condensateur selon la revendication 2, dans lequel le motif conducteur est de forme sensiblement carrée, avec une encoche radiale (13) définissant le U.

9. Un condensateur selon la revendication 8, dans lequel la longueur (b) de l'encoche est sensiblement égale à la moitié du côté (a) du carré.

10. Un condensateur selon la revendication 2, dans lequel les émergences (A; B) de chaque pluralité d'émergences sont réunies entre elles par un élément métallique commun (110) de prise de connexion et de distribution de courant entre les émergences, cet élément métallique comportant une âme centrale (119) et une pluralité de branches radiales (111—118), l'âme centrale reposant sur l'une des faces supérieure et inférieure, respectivement, du bloc céramique, et les branches radiales étant repliées de manière à venir en contact avec les émergences respectives auxquelles elles sont soudées, l'une des branches au moins étant en outre repliée de manière à s'étendre au-delà de l'une des faces du bloc céramique, pour former pôle de connexion commun à la pluralité d'émergences respective.

11. Un condensateur selon la revendication 10, dans lequel deux branches sont repliées de manière à s'étendre au-delà de l'une des faces du bloc céramique, pour former l'une des deux séries de deux pôles (A1, A2; B1, B2) d'un quadripôle.

12. Un condensateur selon la revendication 10, dans lequel les deux éléments métalliques (110; 110') correspondant à chaque pluralité d'émergences (A; B) sont réalisés par pliage et troncature des branches d'une pièce plane identique pour l'un et l'autre élément.

13. Un condensateur selon la revendication 12, dans lequel la face au-delà de laquelle s'étend au moins l'une des branches est la face inférieure du bloc céramique.

14. Un condensateur selon la revendication 12, dans lequel la face au-delà de laquelle s'étend au moins l'une des branches est l'une des faces latérales du bloc céramique.

**Patentansprüche**

1. Kondensator mit einem keramischen Mehrschichten-Dielektrikum, bestehend aus stapelförmig aufeinandergelegten Keramikfolien, welche leitende Muster (10, 20) tragen, die die grundlegenden, von einer isolierenden dielektrischen Schicht getrennten Beläge bilden, wobei diese Muster von einer Schicht zur nächsten so alternieren, daß sich zwei Serien von Belägen bilden, die jeweils mit wenigstens einem überstehenden Teil des Musters an eine gemeinsame leitende Verbindung angeschlossen sind, wobei die leitenden Muster der Beläge eine im ganzen längliche Form besitzen und jedes Muster wenigstens zwei überstehende Teile $(E_1, S_1; E_2, S_2)$ aufweist, die an unterschiedliche leitende Verbindungen angeschlossen sind und sich an den Enden derselben Längsseite (L) des Bauteils befinden, und wobei die entsprechenden leitenden Verbindungen jeweils je einen Eingang $(E_1; E_2)$ und einen Ausgang $(S_1; S_2)$ eines Quadrupols bilden, dadurch gekennzeichnet, daß das eine im ganzen längliche Form besitzende Muster zu einer U-Form umgeschlagen ist und daß sich die zwei am Ende desselben Musters überstehenden Teile $(E_1, S_1; E_2, S_2)$ jeweils an dem freien Ende jedes der Schenkel (12) des U befinden.

2. Kondensator nach Anspruch 1, bei dem an jedem Muster eine Vielzahl von überstehenden Teilen vorgesehen ist, deren Anzahl $n$ größer als 2 ist, wobei diese $n$ überstehenden Teile gleichmäßig entlang derselben Seite des Bauteils verteilt sind und eine von zwei Serien von $n$ Polen eines Multipols bilden.

3. Kondensator nach Anspruch 1, bei dem sich bei demselben Muster einer $(E_1; S_2)$ der an den Enden überstehenden Teile in der Nähe der Ecke (32; 33) des Bauteils, der andere $(S_1; E_2)$ dagegen in der Nähe der Mitte der entsprechenden Seite (31) des Bauteils befindet.

4. Kondensator nach Anspruch 1, bei dem über die an den Enden überstehenden Teile hinaus an jedem Muster wenigstens ein weiterer überstehender Teil $(Y_1; Y_2)$ an dem mittleren Teil (11) des U vorgesehen ist, wobei sich dann die entsprechenden leitenden Verbindungen auf der gleichen Seite (34) des Bauteils, welche dem Mittelstück (11) des U zugeordnet ist, befinden.

5. Kondensator nach Anspruch 4, bei dem dieser zusätzliche überstehende Teil $(Y_1; Y_2)$ einem der an den Enden überstehenden Teile $(S_1; E_2)$ desselben Musters gegenüberliegt.

6. Kondensator nach Anspruch 1, bei dem über die an den Enden überstehenden Teile hinaus an jedem Muster wenigstens ein weiterer überstehender Teil $(X_1; Z_2)$ an dem innersten Bereich eines der Schenkel des U abwechselnd von einer Folie zur nächsten vorgesehen ist und wobei sich dann die entsprechenden leitenden Verbindungen an den jeweiligen Ecken (35, 36) des Bauteils befinden.

7. Kondensator nach Anspruch 1, bei dem über die an den Enden überstehenden Teile hinaus an jedem Muster wenigstens ein weiterer überstehender Teil $(Z_1; X_2)$ in der Mitte einer der Schenkel des U abwechselnd von einer Folie zur nächsten vorgesehen ist und wobei sich dann die entsprechenden leitenden Verbindungen genau an den jeweiligen Seitenmitten (38, 37) des Bauteils befinden.

8. Kondensator nach Anspruch 2, bei dem das leitende Muster eine genau quadratische Form besitzt, wobei das U durch einen radialen Einschnitt (13) definiert ist.

9. Kondensator nach Anspruch 8, bei dem die Länge (b) des Einschnitts genau halb so groß ist wie die Seitenlänge (a) des Quadrats.

10. Kondensator nach Anspruch 2, bei dem die überstehenden Teile (A; B) einer jeden Vielzahl von überstehenden Teilen untereinander mittels eines gemeinsamen, zur Anschlußzuführung und zur Stromverteilung zwischen den überstehenden Teilen dienenden metallischen Elements (110) verbunden sind, das aus einem zentralen Kern (119) und einer Vielzahl radial abstehender Arme (111—118) besteht, wobei der zentrale Kern jeweils an einer Ober- und an einer Unterseite des Keramikblocks aufliegt und die abstehenden Arme so umgebogen sind, daß sie mit den zugeordneten überstehenden Teilen, an denen sie angelötet sind, in Kontakt kommen, und bei dem außerdem wenigstens einer der Arme so umgebogen ist, daß er sich über eine Seite des Keramikblocks hinaus erstreckt, um einen gemeinsamen Anschlußpol für die jeweilige Vielzahl der überstehenden Teile zu bilden.

8

11. Kondensator nach Anspruch 10, bei dem zwei Arme so umgebogen sind, daß sie sich über eine Seite des Keramikblocks hinaus erstrecken, um eine von zwei Serien von Anschlußpolen (A1, A2; B1, B2) eines Quadrupols zu bilden.

12. Kondensator nach Anspruch 10, bei dem die beiden jeder der Vielzahl von überstehenden Teilen (A; B) entsprechenden metallischen Elemente (110; 110') aus einem für beide Elemente identischen, planen Stück durch Biegen und Abbrechen der Arme gefertigt sind.

13. Kondensator nach Anspruch 12, bei dem die Seite, über die sich wenigstens einer der Arme hinaus erstreckt, die Unterseite des Keramikblocks ist.

14. Kondensator nach Anspruch 12, bei dem die Seite, über die sich wenigstens einer der Arme hinaus erstreckt, eine Seitenfläche des Keramikblocks ist.


**Claims**

1. A multilayer capacitor with ceramic dielectric, of the type formed from a stack of sheets of ceramic bearing conductive patterns (10; 20) forming elementary armatures separated by an insulating layer forming a dielectric, these patterns being alternated from one layer to the next so as to form two series of armatures each connected by at least one point where the pattern emerges at a respective common conductive connection, the conductive patterns of the armatures having a generally elongate shape and each having at least two points of emergence ($E_1$, $S_1$; $E_2$, $S_2$), these points of emergence being connected to separate conductive connections and being located at the ends of a single elongate side (L) of the component, the corresponding conductive connections thus respectively constituting one of the inputs ($E_1$; $E_2$) and one of the outputs ($S_1$; $S_2$) of a quadrupole, characterized in that the pattern of generally elongate shape is folded into a U shape, the two end points of emergence ($E_1$, $S_1$; $E_2$, $S_2$) of a single pattern then being located at the distal part of each of the branches (12) of the U.

2. A capacitor according to Claim 1, in which each pattern is provided with a plurality of points of emergence, $n$ in number, $n$ being greater than 2, these $n$ points of emergence being regularly distributed along a single elongate side of the component and constituting one of the two series of $n$ poles of a multipole.

3. A capacitor according to Claim 1, in which, on a single pattern, one ($E_1$; $S_2$) of the end points of emergence is situated in the vicinity of the corner (32; 33) of the component, while the other ($S_1$; $E_2$) end point of emergence is located in the vicinity of the centre of the corresponding side (31) of the component.

4. A capacitor according to Claim 1, in which, apart from the end points of emergence, there is provided on each pattern at least one supplementary point of emergence ($Y_1$; $Y_2$) on the central part (11) of the U, the corresponding conductive connections then being located on a single side (34) of the component, corresponding to the central part of the U.

5. A capacitor according to Claim 4, in which the said supplementary point of emergence ($Y_1$; $Y_2$) is placed opposite an end point of emergence ($S_1$; $E_2$) of the same pattern.

6. A capacitor according to Claim 1, in which, apart from the end points of emergence, there is provided on each pattern at least one supplementary point of emergence ($X_1$; $Z_2$) at the proximal part of one of the arms of the U with the arm alternating from one sheet to the next, the corresponding conductive connections then being located at the respective corners (35, 36) of the component.

7. A capacitor according to Claim 1, in which, apart from the end points of emergence, there is provided on each pattern at least one supplementary point of emergence ($Z_1$; $X_2$) at the centre of one of the arms of the U with the arm alternating from one sheet to the next, the corresponding conductive connections thus being located substantially in the centre of the respective sides (38, 37) of the component.

8. A capacitor according to Claim 2, in which the conductive pattern is of substantially square shape, with a radial notch (13) defining the U.

9. A capacitor according to Claim 8, in which the length (b) of the notch is substantially equal to half the side (a) of the square.

10. A capacitor according to Claim 2, in which the points of emergence (A; B) of each plurality of points of emergence are connected to one another by a common metal element (110) for connection and distribution of current between the points of emergence, this metal element having a central core (119) and a plurality of radial arms (111—118), the central core resting on one of the upper and lower faces respectively of the ceramic block, and the radial arms folded so as to come into contact with the respective points of emergence to which they are soldered, at least one of the arms being furthermore folded so as to extend beyond one of the faces of the ceramic block to form a connection pole common to the respective plurality of points of emergence.

11. A capacitor according to Claim 10, in which two arms are folded so as to extend beyond one of the faces of the ceramic block to form one of the two series of two poles (A1, A2; B1, B2) of a quadrupole.

12. A capacitor according to Claim 10, in which the two metal elements (110; 110') corresponding to each plurality of points of emergence (A; B) are formed by bending and truncating arms of an identical plane piece for one element and the other.

13. A capacitor according to Claim 12, in which the face beyond which at least one of the arms extends is the lower face of the ceramic block.

14. A capacitor according to Claim 12, in which the face beyond which at least one of the arms extends is one of the side faces of the ceramic block.

FIG-1

FIG-2

FIG-3

FIG-4

FIG-5

FIG-6

FIG-7

**FIG.8**

FIG.9

FIG.10

FIG.11

FIG.13

FIG.14

FIG.12

FIG.15

FIG.16

FIG.17

FIG.18

FIG_19

FIG_20